# EUROPÄISCHE PATENTSCHRIFT

(11) **EP 1 250 701 B1**
(45) Veröffentlichungstag und Bekanntmachung des Hinweises auf die Patenterteilung: **17.11.2004**
(21) Anmeldenummer: 01907355.0
(22) Anmeldetag: 15.01.2001
(51) Int. Cl.: G10L 15/26, G06F 3/00, G06F 3/16

(54) **SYSTEM UND VERFAHREN ZUR BLICKFOKUSSIERTEN SPRACHVERARBEITUNG**
SYSTEM AND METHOD FOR VISION-FOCUSED VOICE PROCESSING
SYSTEME ET PROCEDE DE TRAITEMENT VOCAL FOCALISE SUR LA VUE

(30) Priorität: 27.01.2000 DE 10003550
(43) Veröffentlichungstag der Anmeldung: 23.10.2002
(73) Patentinhaber: SIEMENS AKTIENGESELLSCHAFT, 80333 München (DE)
(72) Erfinder: FRIEDRICH, Wolfgang, 91088 Bubenreuth (DE); WOHLGEMUTH, Wolfgang, 91058 Erlangen (DE); YE, Xin, 91058 Erlangen (DE)
(86) Internationale Anmeldenummer: PCT/DE2001/000137
(87) Internationale Veröffentlichungsnummer: WO 2001/056017

(56) Entgegenhaltungen:
- EP-A- 0 718 823
- WO-A-93/14454
- US-A- 5 864 815

## Beschreibung

Die Erfindung betrifft ein System und ein Verfahren zum Bedienen- und Beobachten insbesondere eines Automatisierungssystems und/oder einer Produktions- und/oder Werkzeugmaschine.

Ein derartiges System und Verfahren kommt beispielsweise im Bereich der Automatisierungstechnik, bei Produktions- und Werkzeugmaschinen, bei Diagnose-/Serviceunterstützungssystemen sowie für komplexe Komponenten, Geräte und Systeme, wie beispielsweise Fahrzeuge und industrielle Maschinen und Anlagen zum Einsatz. Ein solches system und Verfahren ist beispielsweise in der Patentschrift US-A-5 668 573 offenbart.

Der Erfindung liegt die Aufgabe zugrunde, ein System und ein Verfahren zum Bedienen- und Beobachten insbesondere eines Automatisierungssystems und/oder einer Produktions- und/oder Werkzeugmaschine anzugeben, das eine Freihandbedienung und die Möglichkeit für eine "Navigation" im Umfeld von Augmented-Reality-Anwendungen auch bei komplexen technischen Anlagen ermöglicht.

Diese Aufgabe wird durch ein System sowie durch ein Verfahren mit den in den Ansprüchen 1 bzw. 8 angegebenen Merkmalen gelöst.

Dabei wird mit Hilfe der Erfassungsmittel, beispielsweise einer Kamera das Blickfeld des Anwenders, das auf ein Anzeigemittel, beispielsweise einen Monitor gerichtet ist, erfasst. Gleichzeitig wird über die Spracherkennungsmittel die vom Anwender abgegebene Sprache ausgewertet. Die Erfassungsmittel und die Spracherkennungsmittel bilden dabei gemeinsam ein blickfokussiertes Spracherkennungssystem, wobei in Abhängigkeit der erkannten Sprachinformation und in Abhängigkeit des erfassten Blickfeldes auf den Anzeigemittel bestimmte vorgebbare Informationsdaten dargestellt werden. Wird beispielsweise mit Hilfe einer an den Anzeigemittel, beispielsweise an dem Bildschirm eingebauten Kamera, festgestellt, dass der Anwender gerade in den Bildschirm schaut und hierdurch einen entsprechenden Prozess beobachten will, so wird über die Kamera als Erfassungsmittel die Spracherkennung des Systems aktiviert, wodurch eine zielgerichtete Auswertung der Spracheingabe erfolgt. Hierdurch ergibt sich somit eine neue Interaktionsform für die Prozessvisualisierung. Richtet der Anwender seinen Blick auf ein weiteres Anzeigemittel oder auf ein anderes Blickfeld des Anzeigemittels, so kann mit Hilfe der Steuerungsmittel eine dem diesen Blickfeld zugeordnete Information nach erfolgreicher Spracherkennung auf den Anzeigemittel dargestellt werden. Hierdurch kann der Anwender freihändig per Sprache einen gewünschten Prozess oder eine gewünschte Produktions- und/oder Werkzeugmaschine intuitiv durch Änderung seines Blickfelds in Kombination mit Sprachsteuerung bedienen und beobachten.

Eine unbeabsichtigte Erkennung und Interpretation einer nicht für das System bestimmten Sprachinformation bzw. eine gezielte Aktivierung der Spracherkennung kann dadurch erzielt werden, dass die Steuerungsmittel das System so ansteuern, dass die Spracherkennungsmittel erst dann aktiviert werden, wenn von den Erfassungsmitteln erfaßt wird, dass das Blickfeld des Anwenders ein bestimmtes Anzeigemittel und/oder zumindest vorgebbare Bereiche des Anzeigemittels betrifft.

Eine vorteilhafte Ausführungsform der Erfassungsmittel besteht darin, dass die Erfassungsmittel zur Erfassung des Blickfeldes des Anwenders eine Kamera aufweisen.

Eine interaktive Sprachkommunikation mit dem System kann dadurch sichergestellt werden, dass das System akustische Wiedergabemittel aufweist, die zur akustischen Wiedergabe von akustischen Informationsdaten als Reaktion auf vom Anwender gezielt über die Spracherkennungsmittel abgegebene Sprachinformation an die akustischen Wiedergabemittel übermittelt wird.

Eine zielgerichtete Verarbeitung der Sprache wird dadurch weiter verbessert, dass das System weitere Anzeigemittel aufweist, die zur Signalisierung des Ortes von mit einer erkannten Sprachinformation verknüpften Informationsdaten.

Eine sichere Information über den Verarbeitungszustand des Systems bezüglich eines Sprachsignals für den Anwender wird dadurch erzielt, dass das System Mittel zur Generierung eines visuellen Feedbacksignals als Reaktion auf den Bearbeitungsstatus bezüglich erkannter Sprachinformation aufweist.

Eine vom Anwender leicht erkennbare Ausgestaltung für das Feedbacksignal besteht darin, dass das visuelle Feedbacksignal als im Bereich des detektierten Blickfeldes des Anwenders eingeblendetes Softwareobjekt ausgebildet ist.

Eine weitere Möglichkeit für ein deutlich auffälliges Feedback zur Unterstützung der Sprachinformation besteht darin, dass das visuelle Feedbacksignal als den jeweiligen Bearbeitungsstatus bezüglich erkannter Sprachinformation kennzeichnendes Farbsignal ausgebildet ist.

Im folgenden wird die Erfindung anhand der in den Figuren dargestellten Ausführungsbeispiele näher beschrieben und erläutert.

Es zeigen:
- FIG 1: ein Blockschaltbild eines Ausführungsbeispiels eines sprachgesteuerten Systems zum Bedienen- und Beobachten eines Automatisierungssystems oder einer Werkzeugmaschine,
- FIG 2: ein Blockschaltbild eines Ausführungsbeispiels eines sprachgesteuerten Systems zum Bedienen- und Beobachten eines Automatisierungssystems oder einer Werkzeugmaschine mit einem visuellen Feedbacksignal in Form eines Softwareobjekts und
- FIG 3: ein Blockschaltbild eines Ausführungsbeispiels eines sprachgesteuerten Systems zum Bedienen- und Beobachten eines Automatisierungssystems oder einer Werkzeugmaschine mit einem visuellen Feedbacksignal in Form einer optischen Einrichtung.

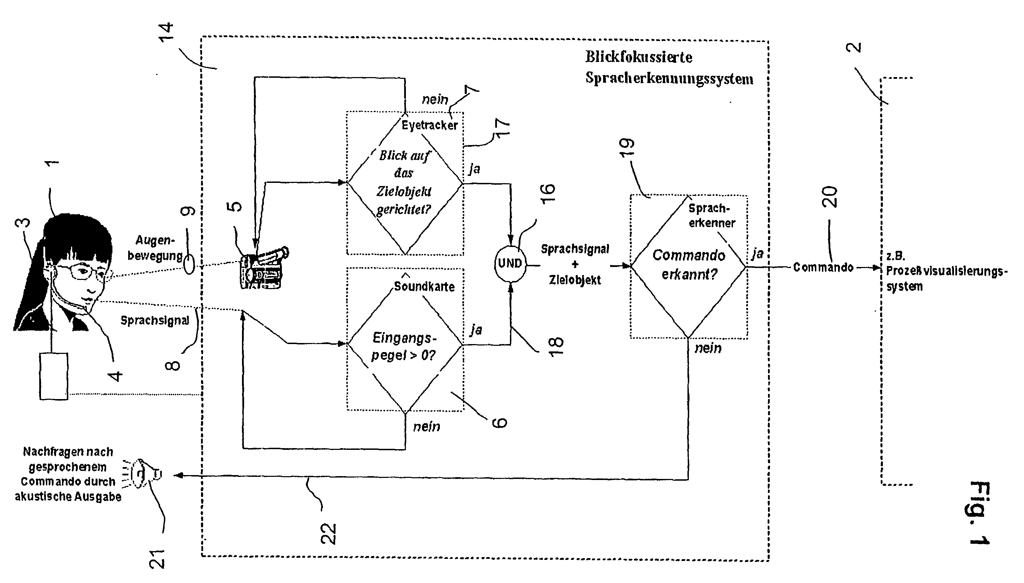

FIG 1 zeigt ein Blockschaltbild eines blickfokussierten Sprachverarbeitungssystems zum Bedienen und Beobachten eines Automatisierungssystems oder einer Werkzeugmaschine. Das blickfokussierte Sprachverarbeitungssystem besteht aus einem blickfokussierten Spracherkennungssystem 14, das von einem Anwender 1 ansteuerbar ist. Der Anwender ist mit einer mobilen Datenbrille 2 ausgestattet, an der ein Mikrofon 4, ein Lautsprecher 3 und eine Datenübertragungsvorrichtung 15 angekoppelt ist. Das blickfokussierte Spracherkennungssystem 14 enthält eine Kamera 5 als Erfassungsmittel zur Erfassung eines Blickfeldes, d.h. der Augenbewegungen des Anwenders 1. Die Signale der Erfassungsmittel 5 werden einer Auswertevorrichtung 7 zugeführt. Das blickfokussierte Spracherkennungssystem 14 enthält darüber hinaus eine akustische Auswertevorrichtung 6, beispielsweise eine Soundkarte eines Computers, die ein Sprachsignal 8 des Anwenders 1 erfasst. Wenn sowohl die Auswerteeinrichtung 7, als auch die akustische Auswerteeinrichtung 6 ein positives Ausgangssignal 17, 18 abgeben, d.h. wenn zum einen das Blickfeld 9 des Anwenders auf zumindest vorgebbare Bereiche beispielsweise eines Anzeigemittels gerichtet sind und zum anderen auch ein entsprechendes Sprachsignal des Anwenders 1 vorliegt, so wird in einen Spracherkenner 19 im Falle eines erkannten Sprachsignals 8 ein entsprechendes Kommando 20 an das Anzeigemittel 2, beispielsweise innerhalb eines Prozessvisualisierungssystems abgegeben.

Die Besonderheit des in FIG 1 gezeigten blickfokussierten Sprachverarbeitungssystems besteht in der Kombination einer Auswertung sowohl des Blickfeldes 9 des Anwenders 1 mit einer zielgerichteten Sprachauswertung. Hierdurch ergibt sich eine zielgerichtet Spracherkennung, so dass der Anwender nicht erst in möglicherweise tiefen Bedienhierarchien nach gewünschten Prozessbildern und Prozesswerten suchen muss, statt dessen kann er durch die Kombination eines gezielten Blickes auf ein bestimmtes Prozessbild und ein entsprechendes Sprachsignal ein gewünschtes Objekt, einen gewünschten Prozesswert etc. direkt "Aufrufen". Hierdurch wird auch die Fehleranfälligkeit bei der Spracherkennung deutlich reduziert, da der Spracherkenner lediglich eine Erkennung von Steuerbefehlen abzuarbeiten hat, die mit dem jeweiligen zugeordneten Blickfeld und in den damit verbundenen Prozessbild etc. verknüpft sind. Es ergibt sich somit eine erhöhte Sensibilität für die Wahrnehmung der Sprachbefehle und Sprachsignale 8 des Anwenders 1. Die Übertragung der Sprachsignale 8 vom Mikrofon 4 zur Soundkarte 6 kann dabei beispielsweise durch eine drahtlose uni- oder bidirektionale Funkschnittstelle erfolgen. Im Falle einer bidirektionalen Funkübertragungsschnittsstelle zwischen Übertragungssystem 15 und blickfokussierten Spracherkennungssystem 14 können bei Nichterkennung eines Sprachsignals 8 auch Nachfragen 22 an den Anwender 1 direkt abgegeben werden. Alternativ oder zusätzlich hierzu ist auch eine Ausgabe derartiger Nachfragen 22 über einen Lautsprecher 21 möglich.

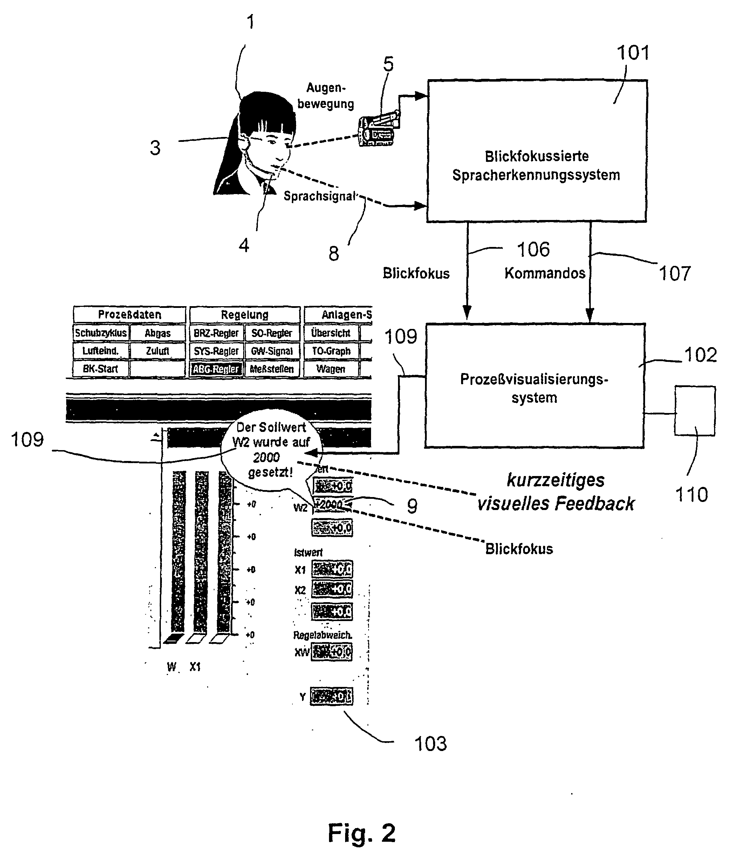

FIG 2 zeigt ein blickfokussiertes Sprachverarbeitungssystem für ein Bedien- und Beobachtungssystem 100, beispielsweise eines Automatisierungssystems. Das Bedien- und Beobachtungssystem enthält ein Prozessvisualisierungssystem 102 das über eine beispielhaft dargestellte Bildschirmmaske 103 eine Steuerung des Prozesses eines Automatisierungssystems ermöglicht.

Das Automatisierungssystem ist in FIG 2 aus Gründen der Übersichtlichkeit nicht näher dargestellt. Das Bedien- und Beobachtungssystem umfasst darüber hinaus eine blickfokussierte Spracherkennungseinheit 101, der Eingangssignale 104, 105 zugeführt werden und die Ausgangssignale 106, 107 abgibt. Das Eingangssignal 104 der blickfokussierten Spracherkennungseinheit wird von einer Kamera 5 als Erfassungsmittel zur Erfassung des Blickfokusses 9 eines Anwenders 1 ermittelt. Das Eingangssignal 105 beruht auf einen Sprachsignal 8 des Anwenders, welches beispielsweise über ein Mikrofon 4 eines Head sets 3 des Anwenders 1 erfasst wird. Das blickfokussierte Spracherkennungssystem 101 liefert ein erstes Ausgangssignal 106, welches dem Blickfokus 9 des Anwenders repräsentiert sowie ein zweites Ausgangssignal 107, welches auf dem Sprachsignal 8 des Anwenders basiert. In Abhängigkeit der Ausgangssignale 106, 107 der blickfokussierten Spracherkennungseinheit 1 wird im Prozessvisualisierungssystem 102 ein Ausgangssignal 108 erzeugt, welches in der Bildschirmmaske 103 als dem Blickfokus 9 zugeordneten Bildschirmausschnitt zugeordnetes Softwareobjekt in die Bildschirmmaske 103 eingeblendet wird.

Dem Ausführungsbeispiel von FIG 2 liegt dabei beispielsweise folgendes Szenario zugrunde:

Der Anwender 1 beobachtet mit Hilfe des Prozessvisualisierungssystems 102 eine Automatisierungsanlage. Der Blickfokus 9 des Anwenders 1 wird dabei gleichzeitig von dem blickfokussierten Spracherkennungssystem 101 verfolgt. Der Anwender 1 ruft durch Sprache, d.h. durch Abgabe eines Sprachsignals 8 ein gewünschtes Objekt, beispielsweise einen bestimmten Prozesswert, der im Blickfokus 9 enthalten ist auf, oder der Anwender möchten einen im Blickfokus 9 enthaltenen Prozesswert ändern. In diesen Fällen ruft der Anwender 1 das Objekt der Sprache auf oder er nennt den neuen Prozesswert. Unmittelbar an seinen Blickfokus 9 wird ihm daraufhin ein visuelles Objekt 109 eingeblendet, in dem die Informationen über die Verarbeitung seines Sprachkommandos enthalten sind. Bei erfolgreicher Ausführung der Ansteuerungen mit Hilfe des Blickfokusses Spracherkennungssystem 101 führt das Prozessvisualisierungssystem 102 und damit die mit dem Prozessvisualisierungssystem 102 und dem Bedien- und Beobachtungssystem 100 verbundene Anlage die entsprechenden Kommandos und Aktionen aus. Durch den Einsatz des blickfokussierten Spracherkennungssystem gekoppelt mit einen visuellen Feedback-Signal ergibt sich eine leichtere, intuitivere Mensch-Maschine-Interaktion. Der Anwender 1 erhält unmittelbar eine Rückmeldung in Form des kurzzeitigen visuellen Feedback-Signals 109 und ist darüber informiert ob seine Sprachkommandos 105,107 vom System 100 registriert, verstanden und ausgeführt wurden.

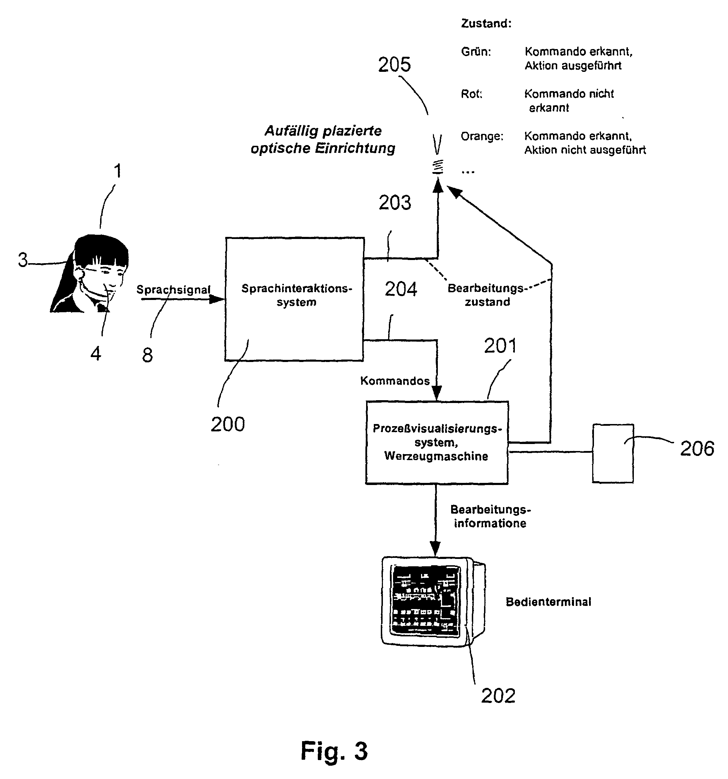

FIG 3 zeigt ein weiteres Ausführungsbeispiel eines Bedienund Beobachtungssystem mit Spracherkennung und einem visuellen Feedback-Signal zur Unterstützung von Sprachinteraktion in Prozessvisualisierung und Produktions- sowie Werkzeugmaschinen. Das System besteht aus einem Sprachinteraktionssystem 200, das als Eingangssignal ein Sprachsignal 8 eines Anwenders 1 auswertet. Das Sprachinteraktionssystem 200 liefert in Abhängigkeit des Sprachsignals 8 ein erstes Ausgangssignal 203 sowie ein zweites Ausgangssignal 204. Das erste Ausgangssignal 203 wird einem Anzeigemittel 205 zugeführt, das verschiedene Betriebszustände beispielsweise in Form verschiedener Farbanzeigen ermöglicht. Das zweite Ausgangssignal 204 des Sprachinteraktionssystems 200 wird einem Prozessvisualisierungssystem einer Anlage 206 oder einer Werkzeugmaschine zugeführt. Die Visualisierung und die Bedien- und Beobachtung des der Anlage 206 bzw. der Werkzeugmaschine erfolgt über einen Bedienterminal 202.

Dem in FIG 3 dargestellten System liegt beispielsweise folgendes Szenario zugrunde. Der Anwender, beispielsweise ein Bediener einer Werkzeugmaschine oder einer Anlage 206 beobachtet durch das Prozessvisualisierungssystem 201 über den Bedienterminal 202 die Anlage 206. Um eine Aktion der Anlage/der Maschine 206 auszuführen, ruft der Anwender 1 bei Sprache entsprechende Kommandos in Form von Sprachsignalen 8. Durch die separat angeordnete und vorteilhafter Weise auffällig platzierte Anzeigevorrichtung, beispielsweise in Form einer Lampe wird der Anwender 1 informiert, wie der Zustand der Verarbeitung seines Sprachkommandos ist. So kann beispielsweise ein grünes Signal der Lampe 205 anzeigen, dass ein Kommando erkannt und eine gewünschte Aktion ausgeführt ist. Leuchtet die Signallampe 205 rot, so wird hierdurch signalisiert, dass ein Kommando nicht erkannt wurde. Eine orange Anzeige der Signallampe 205 kann beispielsweise kennzeichnen, dass ein Kommando erkannt, eine dem Kommando zugrundeliegende Aktion jedoch nicht ausgeführt wurde. Die in FIG 3 gezeigte Methode zur Visualisierung eines Feedbacks auf Sprachkommandos für die Prozessbeobachtung eignet sich vor allem im Feld für die Steuerung von Produktions- und Werkzeugmaschinen, da der Anwender, d.h. der Bediener auch über größere Entfernungen eine klare und eindeutige Signalisierung des Verarbeitungszustands seiner Sprachkommandos 8 hat.

Die blickfokussierte Sprachverarbeitung für die sprachgesteuerte Unterstützung von Prozessvisualisierungssystemen und Werkzeugmaschinen versteht sich insbesondere im speziellen Kontext der Anwendungsfelder "Bedienen und Beobachten von Prozessautomatisierungssystemen" sowie "Produktions- und Werkzeugmaschinen". Dabei ist der Einsatz von Standard-PCs als Visualisierungswerkzeuge sowohl in der Leitebne als auch in der Feldebene heute in der Prozessautomatisierungswelt der Trend. Die Interaktionsform beschränkt sich jedoch auf Maus und Tastatur. Durch Zunahme an Komplexität von technischen Anlagen erschwert sich die Navigation in den Prozessbildern. Man muss oft durch tiefe Bedienhierarchien gehen, bevor das entsprechende Prozessbild oder Prozesswert gefunden werden können. Im Feld kann sich eine "Hands Free"-Bedienung als vorteilhaft erweisen, was mit Maus und Tastatur nicht möglich ist.

Durch Einsatz von Spracherkennungs- und Sprachausgabesystemen, die heute schon an vielen Standard-PCs für Diktieraufgaben eingesetzt werden, kann eine leichtere und intuitivere Navigation in der Prozessvisualisierung ermöglicht werden. So muss der Benutzer nicht in den tiefen Bedienhierarchien nach gewünschten Prozessbildern und Prozesswerten suchen, statt dessen kann er das Objekt direkt "aufrufen".

In diesem Kontext ist beispielsweise für Leitwarte, wo an mehreren Bedienterminals nebeneinander gearbeitet wird (Visualisierung verschiedener Anlagenteile) aber auch bereits bei einem einzelnen Terminal / Monitor von Bedeutung, dass das Interaktionssystem erkennt, worauf der Benutzer gerade seine Aufmerksamkeit fokussiert.

Dazu wird eine am Bildschirm eingebaute Kamera dienen um festzustellen, ob der Benutzer gerade in den Bildschirm schaut und den entsprechenden Prozess beobachten will. Wenn ja, wird die Spracherkennung aktiviert. Somit wird unbeabsichtigte Erkennung / Interpretation vermieden. Durch Sprachausgabe wird der Benutzer benachrichtigt, ob die gewünschte Aktion durchgeführt wird.

Der Kern der Erfindung liegt dabei in der neuer Interaktionsform für die Prozessvisualisierung und der Erkennung, worauf der Benutzer seine Aufmerksamkeit legt, um zielgerichtet die Spracheingabe zu verarbeiten.

Die folgende 2 Szenarien beschreiben die Ausführungsbeispiele der grundlegende Idee:

### Szenario A: (im Leitebene)

Ein Anlageadministrator beobachtet den Anlagezustand durch ein Visualisierungssystem. Ein Teil der Anlage ist in einem kritischen Zustand geraten. Das visualisierte Teil blinkt rot in dem Gesamtanlagebild. Der Administrator schaut auf den Teil am Bildschirm, sein Blick wird lokalisiert, die Spracherkennung wird aktiviert. Der Administrator ruft einfach den Prozesswert oder das Prozessbild, was er näher betrachten möchte. Akustisch und /oder optische Feedback durch Signallampe und Sprachausgabe wird dem Administrator bestätigt, dass seine Wörter vom System erkannt und die gewünschten Aktionen durchgeführt wurden.

### Szenario B: (im Feld)

Ein Werker schaut an den Bedienpanel und möchte bestimmte Prozesswerte anschauen oder Aktionen durchführen. Er hat momentan aber keine Hände frei und eine lange Distanz zur Bedienpanel. Er ruft per Sprache den gewünschten Prozesszustand auf, ein optisches und akustisches Feedback wird die Erkennung und Durchführung bestätigt. Bei Bedarf kann auch Prozesswert angesagt werden.

Zusammenfassend betrifft die Erfindung somit ein System und ein Verfahren zum Bedienen- und Beobachten insbesondere eines Automatisierungssystems und/oder einer Produktions- und/oder Werkzeugmaschine, bei dem das Blickfeld 9 eines Anwenders 1 auf mindestens ein Anzeigemittel 2 erfaßt wird und bei dem eine Sprachinformation 8 des Anwenders 1 zumindest zeitweise in der Weise ausgewertet wird, dass in Abhängigkeit der vom Anwender 1 abgegebenen und von den Spracherkennungsmitteln 4, 8 erkannten Sprachinformation 8 und in Abhängigkeit des erfaßten Blickfeldes 9 gezielt vorgebbare, mit dem erfaßten Blickfeld 9 und der erkannten Sprachinformation verknüpfte Informationsdaten auf dem Anzeigemittel 2 darstellbar sind. Hierdurch ergibt sich eine Freihandbedienung und die Möglichkeit für eine "Navigation" im Umfeld von Augmented-Reality-Anwendungen auch bei komplexen technischen Anlagen.

## Patentansprüche

1. System zum Bedienen und Beobachten insbesondere eines Automatisierungssystems und/oder einer Produktions- und/oder Werkzeugmaschine,
• mit Erfassungsmitteln (5) zur Erfassung eines Blickfeldes (9) eines Anwenders (1) auf mindestens einem Anzeigemittel (2),
• mit Spracherkennungsmitteln (4) zur Erkennung einer Sprachinformation (8) des Anwenders (1) und
• mit Steuerungsmitteln (7) zur Steuerung des Systems in der Weise,
• dass in Abhängigkeit der vom Anwender (1) abgegebenen und von den Spracherkennungsmitteln (4) erkannten Sprachinformation (8) und in Abhängigkeit des von den Erfassungsmitteln (5) erfaßten Blickfeldes (9) gezielt vorgebbare, mit dem erfaßten Blickfeld (9) und der erkannten Sprachinformation verknüpfte Informationsdaten auf dem Anzeigemittel (2) darstellbar sind und
• dass die Spracherkennungsmittel (4) erst dann aktiviert werden, wenn von den Erfassungsmitteln (5) erfaßt wird, dass das Blickfeld des Anwenders ein bestimmtes Anzeigemittel (2) und/oder zumindest vorgebbare Bereiche des Anzeigemittels (2) betrifft.

2. System nach Anspruch 1,
**dadurch gekennzeichnet,**
**dass** die Erfassungsmittel (5) zur Erfassung des Blickfeldes (9) des Anwenders (1) eine Kamera aufweisen.

3. System nach Anspruch 1 oder 2,
**dadurch gekennzeichnet,**
**dass** das System akustische Wiedergabemittel (3) aufweist, die zur akustischen Wiedergabe von akustischen Informationsdaten als Reaktion auf vom Anwender (1) gezielt über die Spracherkennungsmittel (4) abgegebene Sprachinformation (8) an die akustischen Wiedergabemittel (3) übermittelt wird.

4. System nach einem der Ansprüche 1 bis 3,
**dadurch gekennzeichnet,**
**dass** das System weitere Anzeigemittel aufweist, die zur Signalisierung des Ortes von mit einer erkannten Sprachinformation verknüpften Informationsdaten.

5. System nach einem der Ansprüche 1 bis 4,
**dadurch gekennzeichnet,**
**dass** das System Mittel zur Generierung eines visuellen Feedbacksignals als Reaktion auf den Bearbeitungsstatus bezüglich erkannter Sprachinformation (8) aufweist.

6. System nach einem der Ansprüche 1 bis 5,
**dadurch gekennzeichnet,**
**dass** das visuelle Feedbacksignal als im Bereich des detektierten Blickfeldes (9) des Anwenders eingeblendetes Softwareobjekt ausgebildet ist.

7. System nach einem der Ansprüche 1 bis 6,
**dadurch gekennzeichnet,**
**dass** das visuelle Feedbacksignal als den jeweiligen Bearbeitungsstatus bezüglich erkannter Sprachinformation (8) kennzeichnendes Farbsignal ausgebildet ist.

8. Verfahren zum Bedienen und Beobachten insbesondere eines Automatisierungssystems und/oder einer Produktions- und/oder Werkzeugmaschine, bei dem das Blickfeld (9) eines Anwenders (1) auf mindestens einem Anzeigemittel (2) erfaßt wird, bei dem eine Sprachinformation (8) des Anwenders (1) zumindest zeitweise in der Weise ausgewertet wird, dass in Abhängigkeit der vom Anwender (1) abgegebenen und von den Spracherkennungsmitteln (4) erkannten Sprachinformation (8) und in Abhängigkeit des erfaßten Blickfeldes (9) gezielt vorgebbare, mit dem erfaßten Blickfeld (9) und der erkannten Sprachinformation verknüpfte Informationsdaten auf dem Anzeigemittel (2) darstellbar sind und dass das System so angesteuert wird,
dass eine Aktivierung einer Auswertung der Sprachinformation (8) des Anwenders erst dann erfolgt, wenn von den Erfassungsmitteln (5) erfaßt wird, dass das Blickfeld des Anwenders ein bestimmtes Anzeigemittel (2) und/oder zumindest vorgebbare Bereiche des Anzeigemittels (2) betrifft.

9. Verfahren nach Anspruch 8,
**dadurch gekennzeichnet,**
**dass** zur Erfassung des Blickfeldes (9) des Anwenders (1) eine Kamera vorgesehen ist.

10. Verfahren nach Anspruch 8 oder 9,
**dadurch gekennzeichnet,**
**dass** als Reaktion auf vom Anwender (1) gezielt über die Spracherkennungsmittel (4) abgegebene Sprachinformation (8) akustische Informationsdaten an den Anwender über akustische Wiedergabemittel (3) übermittelt werden.

11. Verfahren nach einem der Ansprüche 8 bis 10,
**dadurch gekennzeichnet,**
**dass** dem Anwender (1) über weitere Anzeigemittel der Ort der Anzeige von mit einer erkannten Sprachinformation verknüpften Informationsdaten signalisiert wird.

12. Verfahren nach einem der Ansprüche 8 bis 11,
**dadurch gekennzeichnet,**
**dass** als Reaktion auf den Bearbeitungsstatus bezüglich erkannter Sprachinformation (8) ein visuellen Feedbacksignal erzeugt wird.

13. Verfahren nach einem der Ansprüche 8 bis 12,
**dadurch gekennzeichnet,**
**dass** das visuelle Feedbacksignal als im Bereich des detektierten Blickfeldes (9) des Anwenders eingeblendetes Softwareobjekt ausgebildet ist.

14. Verfahren nach einem der Ansprüche 8 bis 13,
**dadurch gekennzeichnet,**
**dass** das visuelle Feedbacksignal als den jeweiligen Bearbeitungsstatus bezüglich erkannter Sprachinformation (8) kennzeichnendes Farbsignal ausgebildet ist.

## Claims

1. System for operating and monitoring in particular an automation system and/or a production machine and/or a machine tool,
. with detection means (5) to detect the visual field (9) of a user (1) on at least one display means (2),
. with voice recognition means (4) to recognize voice information (8) of the user (1) and
. with control means (7) to control the system such that
. as a function of the voice information (8) output by the user (1) and recognized by the voice recognition means (4) and as a function of the visual field (9) detected by the detection means (5) information data linked to the detected visual field (9) and the recognized voice information can be displayed on the display means (2) and
. the voice recognition means (4) are only activated if the detection means (5) detect that the visual field of the user relates to a certain display means (2) and/or at least predefinable areas of the display means (2).

2. System according to Claim 1,
**characterized in that** the detection means (5) for detecting the visual field (9) of the user (1) comprise a camera.

3. System according to Claim 1 or 2,
**characterized in that** the system comprises acoustic playback means (3), for the acoustic rendering of information data that is transmitted in response to voice information (8) output by the user (1) specifically via the voice recognition means (4) to the acoustic playback means (3).

4. System according to one of Claims 1 to 3,
**characterized in that** the system comprises further display means to signal the location of information data linked to recognized voice information.

5. System according to one of Claims 1 to 4,
**characterized in that** the system comprises means for generating a visual feedback signal in response to the processing status in respect of recognized voice information (8).

6. System according to one of Claims 1 to 5,
**characterized in that** the visual feedback signal is configured as a software object superimposed in the area of the detected visual field (9) of the user.

7. System according to one of Claims 1 to 6,
**characterized in that** the visual feedback signal is configured as a color signal identifying the respective processing status in respect of recognized voice information (8).

8. Method for operating and monitoring in particular an automation system and/or a production machine and/or a machine tool, with which the visual field (9) of a user (1) is detected on at least one display means (2), with which voice information (8) of the user (1) is evaluated at least intermittently in such a way that, as a function of the voice information (8) output by the user (1) and recognized by the voice recognition means (4) and as a function of the detected visual field (9), specifically predefinable information data linked to the detected visual field (9) and the recognized voice information can be displayed on the display means (2) and that the system is controlled such that evaluation of the voice information (8) of the user is only activated if the detection means (5) detect that the visual field of the user relates to a certain display means (2) and/or at least predefinable areas of the display means (2).

9. Method according to Claim 8,
**characterized in that** a camera is provided to detect the visual field (9) of the user (1).

10. Method according to Claim 8 or 9,
**characterized in that**, in response to voice information (8) output by the user (1) specifically via the voice identification means (4), acoustic information data is transmitted to the user via acoustic playback means (3).

11. Method according to one of Claims 8 to 10,
**characterized in that** the location of the display of information data linked to recognized voice information is signaled to the user (1) via further display means.

12. Method according to one of Claims 8 to 11,
**characterized in that** a visual feedback signal is generated in response to the processing status in respect of recognized voice information (8).

13. Method according to one of Claims 8 to 12,
**characterized in that** the visual feedback signal is configured as a software object superimposed in the area of the detected visual field (9) of the user.

14. Method according to one of Claims 8 to 13,
**characterized in that** the visual feedback signal is configured as a color signal identifying the respective processing status in respect of recognized voice information (8).

## Revendications

1. Système pour la commande et l'observation notamment d'un système automatisé et/ou d'une machine de production et/ou d'une machine-outil, comportant
• des moyens de détection (5) pour la détection d'un champ visuel (9) d'un utilisateur (1) sur au moins un moyen d'affichage (2),
• des moyens de reconnaissance de la parole (4) pour la reconnaissance d'une information vocale (8) de l'utilisateur (1), et
• des moyens de commande (7) pour la commande du système de telle sorte que,
• en fonction de l'information vocale (8) fournie par l'utilisateur (1) et reconnue par les moyens de reconnaissance de la parole (4) et en fonction du champ visuel (9) détecté par les moyens de détection (5), des données informationnelles pouvant être prédéterminées de manière ciblée et liées au champ visuel (9) détecté et à l'information vocale reconnue peuvent être représentées sur le moyen d'affichage (2), et
• les moyens de reconnaissance de la parole (4) ne sont activés qu'à partir du moment où les moyens de détection (5) ont détecté que le champ visuel de l'utilisateur concerne un certain moyen d'affichage (2) et/ou au moins des zones pouvant être prédéterminées du moyen d'affichage (2).

2. Système selon la revendication 1,
**caractérisé par le fait que** les moyens de détection (5) comportent une caméra pour la détection du champ visuel (9) de l'utilisateur (1).

3. Système selon la revendication 1 ou 2,
**caractérisé par le fait que** le système comporte des moyens de reproduction sonore (3) qui sont destinés à la reproduction sonore de données informationnelles sonores en réaction à une information vocale (8) fournie par l'utilisateur (1) via les moyens de reconnaissance de la parole (4).

4. Système selon l'une des revendications 1 à 3,
**caractérisé par le fait que** le système comporte d'autres moyens d'affichage qui sont destinés à la signalisation de la localisation de données informationnelles liées à une information vocale reconnue.

5. Système selon l'une des revendications 1 à 4,
**caractérisé par le fait que** le système comporte des moyens pour la génération d'un signal de retour visuel en réaction à l'état de traitement faisant suite à une information vocale (8) reconnue.

6. Système selon l'une des revendications 1 à 5,
**caractérisé par le fait que** le signal de retour visuel est conçu comme un objet logiciel inséré dans la zone du champ visuel (9) détecté de l'utilisateur.

7. Système selon l'une des revendications 1 à 6,
**caractérisé par le fait que** le signal de retour visuel est conçu comme un signal de couleur caractérisant l'état de traitement respectif faisant suite à une information vocale (8) reconnue.

8. Procédé pour la commande et l'observation notamment d'un système automatisé et/ou d'une machine de production et/ou d'une machine-outil, dans lequel on détecte le champ visuel (9) d'un utilisateur (1) sur au moins un moyen d'affichage (2), dans lequel on évalue au moins de temps en temps une information vocale (8) de l'utilisateur (1) de telle sorte que, en fonction de l'information vocale (8) donnée par l'utilisateur (1) et reconnue par les moyens de reconnaissance de la parole (4) et en fonction du champ visuel (9) détecté, des données informationnelles pouvant être prédéterminées de manière ciblée et liées au champ visuel (9) détecté et à l'information vocale reconnue peuvent être représentées sur le moyen d'affichage (2) et que le système est commandé de telle sorte qu'une activation de l'évaluation de l'information vocale (8) de l'utilisateur s'effectue seulement à partir du moment où les moyens de détection (5) ont détecté que le champ visuel de l'utilisateur concerne un certain moyen d'affichage (2) et/ou au moins des zones pouvant être prédéterminées du moyen d'affichage (2).

9. Procédé selon la revendication 8,
**caractérisé par le fait qu'**une caméra est prévue pour la détection du champ visuel (9) de l'utilisateur (1).

10. Procédé selon la revendication 8 ou 9,
**caractérisé par le fait que**, en réaction à une information vocale (8) fournie par l'utilisateur (1) via les moyens de reconnaissance de la parole (4), on transmet des données informationnelles sonores à l'utilisateur par l'intermédiaire de moyens de reproduction sonore (3).

11. Procédé selon l'une des revendications 8 à 10,
**caractérisé par le fait qu'**on signale à l'utilisateur (1), par l'intermédiaire d'autres moyens d'affichage, la localisation de l'affichage de données informationnelles liées à une information vocale reconnue.

12. Procédé selon l'une des revendications 8 à 11,
**caractérisé par le fait que**, en réaction à l'état de traitement faisant suite à une information vocale (8) reconnue, on produit un signal de retour visuel.

13. Procédé selon l'une des revendications 8 à 12,
**caractérisé par le fait que** le signal de retour visuel est conçu comme un objet logiciel inséré dans la zone du champ visuel (9) détecté de l'utilisateur.

14. Procédé selon l'une des revendications 8 à 13,
**caractérisé par le fait que** le signal de retour visuel est conçu comme un signal de couleur caractérisant l'état de traitement respectif faisant suite à une information vocale (8) reconnue.
